# EUROPEAN PATENT APPLICATION

(11) **EP 1 695 874 A1**
(43) Date of publication of application: **30.08.2006**
(21) Application number: 05107448.2
(22) Date of filing: 12.08.2005
(51) Int. Cl.: B60R 19/00, E01F 15/14

(54) **Cushion for crash attenuation system**

(30) Priority: 25.02.2005 US 656268 P
(71) Applicant: Albert W. Unrath, Inc., Line Lexington PA 18932 (US)
(72) Inventor: Unrath, Albert W., 18932, Line Lexington (US)
(74) Representative: Patentanwalts-Partnerschaft Rotermund + Pfusch + Bernhard

(57) **Abstract**

A crash cushion (100) in accordance with the invention has a back plate (104) and an energy absorbing body (106). The energy absorbing body (106) has three or more sections (112) having cartridges (114) of differing impact absorption. Each of the cartridges (114) is preferably made of layers of hexagonal remanufactured fibrous material cells. The cartridges (114) are encased in water-impermeable bags. The body (106) has a water-impermeable skin (107) of rigid panels sealed together with a suitable tape, such as butyl tape, caulked on the outside, and painted.

## Description

### Field Of The Invention

The present invention relates to vehicle-mounted crash attenuation systems.

### Background Of The Invention

Crash attenuation devices have been developed for mounting on vehicles that are parked or moving slowly on roadways, for example at construction or maintenance sites, in order to attenuate the impacts from collisions with the parked vehicle. Often times, vehicles equipped with crash attenuators are purposely deployed around work sites to shield workers at the site from being hit. Instead, errant vehicles strike the attenuator which arrests the motion of the vehicle and dissipating its impacting energy. Examples of these attenuation devices are disclosed in U.S. Pat. Nos. 6,186,565, 6,098,767, 5,052,732, 4,635,981, and 4,658,941 incorporated herein by reference.

A crash cushion of the present invention is adapted for use in a crash attenuation device adapted for mounting on a vehicle to attenuate the impacts from collisions. Generally, such attenuation devices comprise a frame adapted to be mounted on the vehicle, and a crushable, energy-absorbing crash cushion. The present invention is directed to improvements in such crash cushions.

### Summary of the Invention

A crash cushion in accordance with the invention has a back plate and an energy absorbing body. The energy absorbing body has two or more sections having cartridges of differing impact absorption. Each of the cartridges is preferably made of a modular, cellular, fibrous, crushable material, such as layers of hexagonal cells of remanufactured fibrous material. The cartridges are encased in water-impermeable bags. The body has a water-impermeable skin of rigid panels sealed together with a suitable tape, such as butyl tape, caulked on the outside, and painted. The panels may be of aluminum, and riveted together. In one embodiment, the body may have two sections joined to one another with a hinge for storage and transportation. In another embodiment, the body may have a proximal section and a distal section, both sealed, and adapted to be joined together along a seam.

### Brief Description Of The Drawings

Understanding of the present invention will be facilitated by considering the following detailed description of the preferred embodiments of the present invention taken in conjunction with the accompanying drawings, in which like numerals refer to like parts, and:

Figure 1 is a somewhat schematic view of a two-chamber crash cushion in accordance with an embodiment of the invention.

Figure 2 is a somewhat schematic view of an alternative embodiment of a two chamber crash cushion in accordance with the invention.

Figure 3 is a somewhat schematic view of an alternative embodiment of a two chamber crash cushion in accordance with the invention.

Figure 4 is a somewhat schematic view of an embodiment of a five chamber crash cushion in accordance with the invention.

Figure 5 is a somewhat schematic view of an alternative embodiment of a five chamber crash cushion in accordance with the invention.

Figure 6 is a somewhat schematic view of an eight chamber crash cushion in accordance with the invention.

Figure 7 is a somewhat schematic view of an eight chamber crash cushion in accordance with an alternative embodiment of the invention.

Figure 8 is a somewhat schematic view of a crash cushion in accordance with an embodiment of the invention having two rotatably attached parts.

Figure 9 is a somewhat schematic view of a two-part crash cushion in accordance with an embodiment of the invention.

Figure 10 is a somewhat schematic view of an eight chamber crash cushion in accordance with an embodiment of the invention.

Figure 11 is an isometric view, with partial cutaway, of cartridges in accordance with an embodiment of the invention.

### Detailed Description Of The Preferred Embodiments Of The Invention

It is to be understood that the figures and descriptions of the present invention have been simplified to illustrate elements that are relevant for a clear understanding of the present invention, while eliminating, for the purpose of clarity, many other elements found in cushions for use in crash attenuation systems. Those of ordinary skill in the art may recognize that other elements and/or steps are desirable and/or required in implementing the present invention. However, because such elements and steps are well known in the art, and because they do not facilitate a better understanding of the present invention, a discussion of such elements and steps is not provided herein.

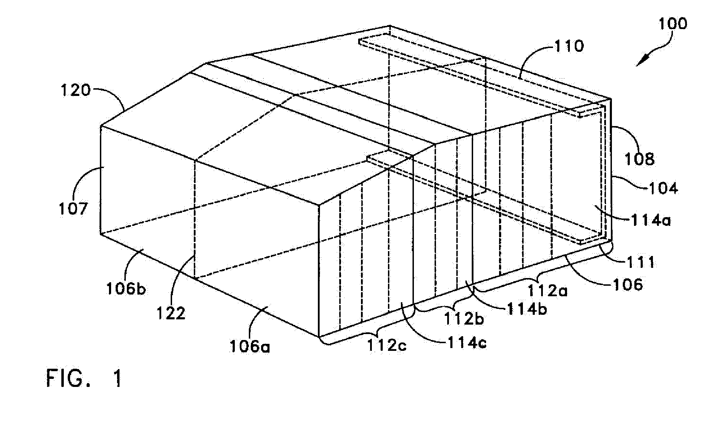

Referring to Fig. 1, a crash cushion 100 is shown somewhat schematically. Crash cushion 100 is adapted to be mounted on a mounting plate of an impact absorbing assembly, such as that shown in U.S. Patent No. 6,098,767, which is expressly incorporated by reference herein in its entirety. The crash cushion 100 has a back plate 104 and an energy absorbing section body 106. The back plate 104 may be contained within energy absorbing body 106, as illustrated. Back plate 104 has a vertical section 108, a top section 110 extending distally below the top proximal edge of the energy absorbing body 106, and a lower section 111 extending distally above the bottom proximal edge of the energy absorbing body. Back plate 104 may be of 3/16" steel plate, for example. For ease of viewing, similar back plates are only generally indicated in succeeding figures. The energy absorbing body 106 comprises a plurality of individual cartridges. The cartridges are arranged to provide at least three sections 112a, 112b and 112c of different impact absorption. The proximal section 112a has a relatively greater impact resistance, and the cartridges forming this section become deformed only with the application of relatively high forces resulting from relatively high speed impacts, i.e., impacts from vehicles traveling at or near the highest speed for which cushion 106 is approved, with little crushing or other damage at lower speed impacts. The intermediate section 112b has lesser impact resistance, and the cartridges forming this section are more easily damaged than those of proximal section 112a, become deformed at impacts of relatively lower speeds than those impacts that cause deformation of the cartridges of proximal section 112a, while the distal section112c has still lesser impact resistance, and the cartridges forming this section are more easily damaged than the cartridges of sections 112a or 112b, and bear the brunt of low and moderate speed impacts.

Impact absorbing body 106, and sections 112a, 112b and 112c may be divided into two chambers 106a, 106b by vertical, longitudinal, generally planar panel 122, indicated in dashed lines in Fig. 1. Panel 122 may be made of a rigid material, such as a metal, and may be of aluminum.

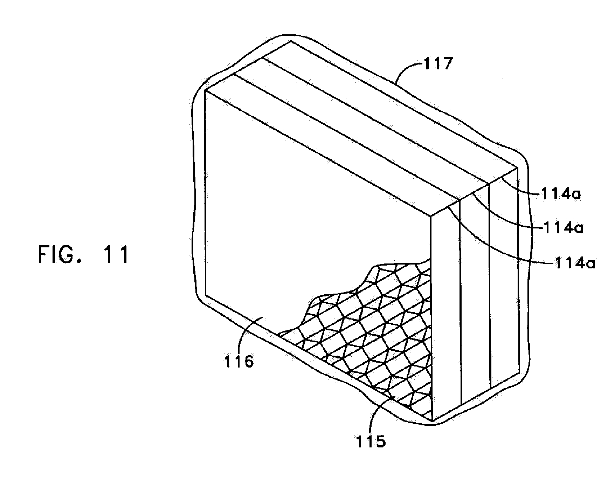

The proximal section 112a in chambers 106a and 106b may comprise a number of cartridges 114a, the edges along one wall of chamber 106a are indicated by dashed lines, and may have a thickness of about 18 to about 24 inches, although a greater or lesser thickness is possible. The number of cartridges is selected based on the thickness of cartridges and the length of proximal section 112a. The thickness of cartridges 114a in the longitudinal direction may be 3 inches. Cartridges 114a may be made of a modular, cellular, fibrous, crushable material. In particular, referring to Fig. 11, each of the cartridges 114a is preferably made of layers of hexagonal remanufactured fibrous material cells 115, oriented with their long axes in the longitudinal direction. Each end of each cell is covered in a cover sheet 116 of remanufactured fibrous material, which is shown partially removed in Fig. 11 for ease of illustration. Cover sheets 116 define transverse faces of each cartridge 114a. The cartridges used in all embodiments described below may be the same, except for varying the cell diameter and remanufactured fibrous material generally as described. The cells in each section may have a length of about 3.0 inches. The cells in proximal section 112a preferably have a 1.0" cell diameter.

The weight of the remanufactured fibrous material from which the cartridges of the present invention are made may be selected depending on the desired force resisting and absorbing characteristics of the material. For example remanufactured fibrous material having a weight of between about 12 pounds and about 23 pounds may be employed. A suitable source of these cartridges is HoneyCell. All of the cartridges in each chamber 106a, 106b are wrapped in a plastic bag, such as plastic bag 117 shown in Fig. 11, which may be of, for example, single layer 4 mil or 6 mil plastic sheet.

Intermediate section 112b may comprise a number of cartridges 114b, the edges of which are indicated by dashed lines, and may have a thickness of about 12 to about 18 inches, although a greater or lesser thickness is possible. The number of cartridges is selected based on the thickness of cartridges and the length of proximal section 112b. The thickness of cartridges 114b in the longitudinal direction may be 3 inches. Each of the cartridges 114b is preferably made of layers of hexagonal remanufactured fibrous material cells. Each end of each cell is covered in a layer of remanufactured fibrous material. The cells are preferably oriented with their long axes in the longitudinal direction. The cells in intermediate section 112b preferably have cell diameter greater than the cell diameter of the cells in cartridges 114a, and preferably about 1.25" cell diameter.

Distal section 112c may comprise a number of cartridges 114c, the edges of which are indicated by dashed lines, and may have a thickness of about 12 to about 18 inches, although a greater or lesser thickness is possible. The number of cartridges is selected based on the thickness of cartridges and the length of distal section 112c. The thickness of cartridges 114c in the longitudinal direction may be 3 inches. Each of the cartridges 114c is preferably made of layers of hexagonal remanufactured fibrous material cells. Each end of each cell is covered in a layer of remanufactured fibrous material. The cells in distal section 112c preferably have a cell diameter greater than the cell diameter of the cells of intermediate section 112b and proximal section 112a, and may preferably have about 1.5" cell diameter.

Energy absorbing body 106 is preferably encased in a lightweight, rigid, water-impermeable skin 107. The skin 107 may be made up of aluminum panels, which are joined to one exclusively by rivets, or alternatively primarily by rivets and to a lesser extent by welds. Rivets are placed in pre-engineered locations, which vary in spacing from about 1 inch to about 6 inches. Stainless steel rivets may be employed. Aluminum of 0.05 inch thickness, of 5052 alloy aluminum, may be employed, by way of example. Panels are joined together by a construction adhesive. A butyl tape, such as butyl tape available from Sika Corporation, of Lyndhurst, New Jersey, may be employed to provide a watertight seal between adjacent aluminum panels. Caulk, such as a paintable polyurethane caulk, is applied to any voids in the tape. A water soluble, rust-inhibitive paint, which is not degraded by UV radiation, may be provided covering the exterior surface of body 106.

The plastic bag(s) encasing the cartridges, the butyl tape, and the paint provide a triple seal against water infiltration into the cartridges. An advantage of such a triple seal is that protection is obtained against water infiltration without the need to provide a water-impermeable coating on the exterior surface of the aluminum panels. Such coatings are prone to degrade with exposure to sunlight. Also, there is no need to provide a plastic jacket for each cartridge.

Body 106 may be rectangular in shape, with a planar upper surface. Alternatively, as may be seen generally at 120, the upper surface of body 106 may optionally be tapered near the distal end thereof. Cartridges may similarly be tapered. The optional tapered surface provided permits mounting of accessories, such as brake and turn indicator lights, with a plurality of bodies 106 stacked on one another.

In one embodiment, body 106 has an overall length of about 35 inches, and an overall width of about 90 inches, and an overall height of about 28 inches. The optional tapered portion extends about 15 inches from the distal end, and the height at the distal end is about 22 inches. Such a body 106 fully absorbs the kinetic energy of a passenger car or truck having a mass of 2000 kilograms moving at a speed of up to about 40 kilometers per hour.

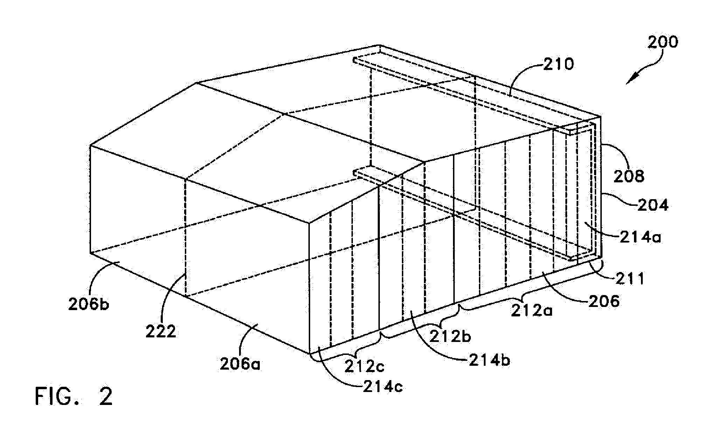

Referring now to Fig. 2, an alternative embodiment of a cushion 200 in accordance with the invention is somewhat schematically illustrated. The crash cushion 200 has a back plate 204 and an energy absorbing section body 206. The back plate 204 has a vertical section 208, a top section 210 extending over the top proximal edge of the energy absorbing body 206, and a lower section 211 extending under the bottom proximal edge of the energy absorbing body. The energy absorbing body 206 comprises a plurality of individual cartridges. The cartridges are arranged to provide at least three sections 212a, 212b and 212c of different impact absorption. The proximal section 212a has a relatively greater impact resistance, and the cartridges forming this section become deformed only with the application of relatively high forces resulting from relatively high speed impacts, with little crushing or other damage at lower speed impacts. The intermediate section 212b has lesser impact resistance, and the cartridges forming this section are more easily damaged than those of proximal section 212a, become deformed at impacts of relatively lower speeds than those impacts that cause deformation of the cartridges of proximal section 212a, while the distal section 212c has still lesser impact resistance, and the cartridges forming this section are more easily damaged than the cartridges of sections 212a or 212b, and bear the brunt of low and moderate speed impacts.

Impact absorbing body 206, and sections 212a, 212b and 212c may be divided into two chambers 206a, 206b by vertical, longitudinal, generally planar panel 222, indicated in dashed lines in Fig. 2. Panel 222 may be made of a rigid material, such as a metal, and may be of aluminum.

The proximal section 212a in chamber 206a may comprise a number of cartridges 214a, the lateral edges of which are indicated by dashed lines, and may have a thickness of about 18 to about 30 inches, although a greater or lesser thickness is possible. The number of cartridges is selected based on the thickness of cartridges and the length of proximal section 212a. The thickness of cartridges 214a in the longitudinal direction may be 3 inches. Each of the cartridges 214a is preferably made of layers of hexagonal remanufactured fibrous material cells. Each end of each cell is covered in a layer of remanufactured fibrous material. The cells in proximal section 212a preferably have a 1.0" cell diameter.

The weight of the remanufactured fibrous material from which the cartridges of the present invention are made may be selected depending on the desired force resisting and absorbing characteristics of the material. For example remanufactured fibrous material having a weight of between about 12 pounds and about 23 pounds may be employed. All cartridges are enclosed in plastic bags, as described above.

Intermediate section 212b may comprise a number of cartridges 214b, the edges of which are indicated by dashed lines, and may have a thickness of about 12 to about 18 inches, although a greater or lesser thickness is possible. The number of cartridges is selected based on the thickness of cartridges and the length of proximal section 212b. The thickness of cartridges 214b in the longitudinal direction may be 3 inches. Each of the cartridges 214b is preferably made of layers of hexagonal remanufactured fibrous material cells. Each end of each cell is covered in a layer of remanufactured fibrous material. The cells in proximal section 212b preferably have a cell diameter greater than the cell diameter of the cells in cartridges 214a, and preferably about 1.25" cell diameter.

Distal section 212c may comprise a number of cartridges 214c, the edges of which are indicated by dashed lines, and may have a thickness of about 12 to about 18 inches, although a greater or lesser thickness is possible. The number of cartridges is selected based on the thickness of cartridges and the length of distal section 212c. The thickness of cartridges 214c in the longitudinal direction may be 3 inches. Each of the cartridges 214c is preferably made of layers of hexagonal remanufactured fibrous material cells. Each end of each cell is covered in a layer of remanufactured fibrous material. The cells in distal section 212c preferably have a cell diameter greater than the cell diameter of the cells of intermediate section 212b and proximal section 212a, and may preferably have about 1.5" cell diameter.

Energy absorbing body 206 is preferably encased in a lightweight, rigid, water-impermeable skin, as described above in connection with Fig. 1.

Body 205 may be rectangular with a planar upper surface. Alternatively, as may be seen generally at 220, the upper surface of body 206 may be tapered near the distal end thereof. The optional tapered surface provided permits mounting of accessories, such as brake and turn indicator lights, with a plurality of bodies 206 stacked on one another.

In one embodiment, body 206 has an overall length of about 47 inches, and an overall width of about 90 inches, and an overall height of about 28 inches. The optional tapered portion extends about 15 inches from the distal end, and the height at the distal end is about 22 inches. Such a body 206 fully absorbs the kinetic energy of a passenger car or truck having a mass of 2000 kilograms moving at a speed of up to about 50 kilometers per hour.

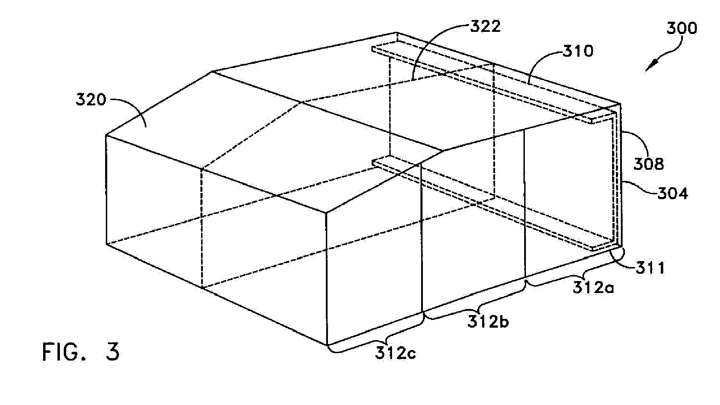

Referring now to Fig. 3, a crash cushion 300 according to another embodiment of the invention is shown somewhat schematically. The crash cushion 100 has a back plate 304 and an energy absorbing section body 306. The back plate 304, which is only indicated schematically in Fig. 3, has a vertical section 308, a top section 310 extending over the top proximal edge of the energy absorbing body 306, and a lower section 311 extending under the bottom proximal edge of the energy absorbing body. Back plate 304 may be of 3/16" steel plate. The energy absorbing body 306 comprises a plurality of individual cartridges. The cartridges are arranged to provide at least three sections 312a, 312b and 312c of different impact absorption. The proximal section 312a has a relatively greater impact resistance, and the cartridges forming this section become deformed only with the application of relatively high forces resulting from relatively high speed impacts, i.e., impacts from vehicles traveling at or near the highest speed for which cushion 306 is approved, with little crushing or other damage at lower speed impacts. The intermediate section 312b has lesser impact resistance, and the cartridges forming this section are more easily damaged than those of proximal section 312a, becoming deformed at impacts of relatively lower speeds than those impacts that cause deformation of the cartridges of proximal section 312a, while the distal section 312c has still lesser impact resistance, and the cartridges forming this section are more easily damaged than the cartridges of sections 312a or 312b, and bear the brunt of low and moderate speed impacts.

Impact absorbing body 306, and sections 312a, 312b and 312c may be divided into two chambers 306a, 306b by vertical, longitudinal, generally planar panel 322, indicated in dashed lines in Fig. 3. Panel 322 may be made of a rigid material, such as a metal, and may be of aluminum.

The proximal section 312a in chamber 306a may comprise a number of cartridges, which are not shown, and may have a thickness of about 30 to about 36 inches, although a greater or lesser thickness is possible. The number of cartridges is selected based on the thickness of cartridges and the length of proximal section 312a. The thickness of cartridges in the longitudinal direction may be 3 inches. Each of the cartridges is preferably made of layers of hexagonal remanufactured fibrous material cells. Each end of each cell is covered in a layer of remanufactured fibrous material. The cells in proximal section 312a preferably have a 1.0" cell diameter.

Intermediate section 312b may comprise a number of cartridges, similar to those described above, the edges of which are indicated by dashed lines, and may have a thickness of about 12 to about 18 inches, although a greater or lesser thickness is possible. The number of cartridges is selected based on the thickness of cartridges and the length of proximal section 312b. The thickness of cartridges in the longitudinal direction may be 3 inches. Each of the cartridges is preferably made of layers of hexagonal remanufactured fibrous material cells. Each end of each cell is covered in a layer of remanufactured fibrous material. The cells are preferably oriented with their long axes in the longitudinal direction. The cells in intermediate section 312b preferably have cell diameter greater than the cell diameter of the cells in the cartridges of proximal section 312a, and preferably about 1.25" cell diameter.

Distal section 312c may comprise a number of cartridges 314c, the edges of which are indicated by dashed lines, and may have a thickness of about 15 inches to about 24 inches, although a greater or lesser thickness is possible. The number of cartridges is selected based on the thickness of cartridges and the length of distal section 312c. The thickness of cartridges 314c in the longitudinal direction may be 3 inches. Each of the cartridges 114c is preferably made of layers of hexagonal remanufactured fibrous material cells. Each end of each cell is covered in a layer of remanufactured fibrous material. The cells in distal section 312c preferably have a cell diameter greater than the cell diameter of the cells of intermediate section 312b and proximal section 312a, and may preferably have about 1.5" cell diameter.

Energy absorbing body 306 is preferably encased in a lightweight, rigid, water-impermeable skin, as described above.

Body 306 may be rectangular in shape, with a planar upper surface. Alternatively, as may be seen generally at 320, the upper surface of body 306 may be tapered near the distal end thereof. The optional tapered surface provided permits mounting of accessories, such as brake and turn indicator lights, with a plurality of bodies 306 stacked on one another.

In one embodiment, body 306 has an overall length of about 58 inches, and an overall width of about 90 inches, and an overall height of about 28 inches. The optional tapered portion extends about 15 inches from the distal end, and the height at the distal end is about 22 inches. Such a body 306 fully absorbs the kinetic energy of a passenger car or truck having a mass of 2000 kilograms moving at a speed of up to about 60 kilometers per hour.

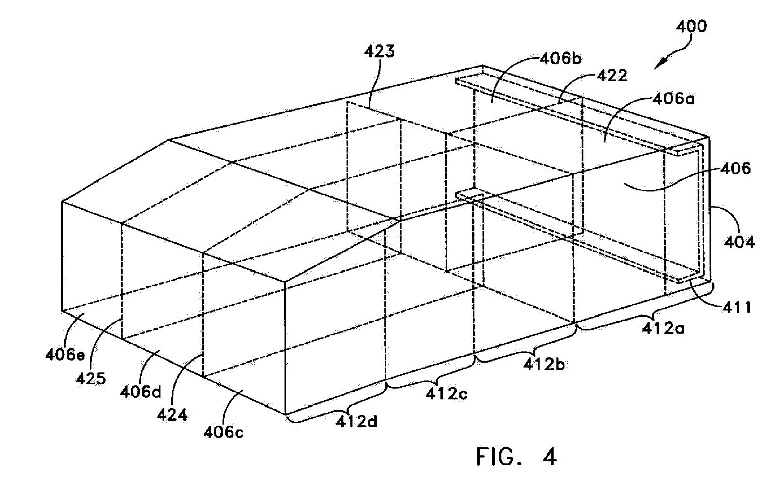

Referring now to Fig. 4, a crash cushion 400 according to another embodiment of the invention is shown somewhat schematically. The crash cushion 400 has a back plate 404 and an energy absorbing body 406. The back plate 404 has a vertical section 408, a top section 410 extending over the top proximal edge of the energy absorbing body 406, and a lower section 411 extending under the bottom proximal edge of the energy absorbing body. Back plate 404 may be of steel. The energy absorbing body 406 comprises a plurality of individual cartridges. The cartridges are arranged to provide at least four sections 412a, 412b, 412c and 412d of different impact absorption. The proximal section 412a has a relatively greater impact resistance, and the cartridges forming this section become deformed only with the application of relatively high forces resulting from relatively high speed impacts, i.e., impacts from vehicles traveling at or near the highest speed for which cushion 406 is approved, with little crushing or other damage at lower speed impacts. The first intermediate section 412b has lesser impact resistance, and the cartridges forming this section are more easily damaged than those of proximal section 412a, becoming deformed at impacts of relatively lower speeds than those impacts that cause deformation of the cartridges of proximal section 412a, while the second intermediate section 412c has still lesser impact resistance, and the cartridges forming this section are more easily damaged than the cartridges of sections 412a or 412b. Distal section 412d has cartridges that have still less impact resistance than those of second intermediate section 412c, and bear the brunt of low and moderate speed impacts.

Impact absorbing body 406 may be divided into five chambers. Section 412a may be divided into two chambers 406a, 406b by vertical, longitudinal, generally planar panel 422, indicated in dashed lines in Fig. 4. Panel 422 extends to vertical, transverse, generally planar panel 423, indicated in dashed lines in Fig. 4. Sections 412b, 412c, and 412d are divided into three chambers 406c, 406d, 406e, of equal by vertical, longitudinal, generally planar panels 424, 425, indicated in dashed lines in Fig. 4. Panels 422, 423, 424, 425 may be made of a rigid material, such as a metal, and may be of aluminum. Transverse panel 423 provides a structural reinforcement for body 406, tending to prevent or reduce torquing of body 406.

The proximal section 412a in chamber 306a may comprise a number of cartridges as described above, and may have a thickness of about 30 to about 36 inches, although a greater or lesser thickness is possible. The number of cartridges is selected based on the thickness of cartridges and the length of proximal section 412a. The cells in proximal section 412a preferably have a 0.75" cell diameter. Identical cartridges may be provided in chamber 412b.

All of the cartridges in each chamber can be wrapped in a plastic bag as described above.

First intermediate section 412b may comprise a number of cartridges as described above, and may have a thickness of about 30 to about 36 inches, although a greater or lesser thickness is possible. The number of cartridges is selected based on the thickness of cartridges and the length of first intermediate section 412b. The cells in first intermediate section 412b preferably have cell diameter greater than the cell diameter of the cells in cartridges in the proximal section 412a, and preferably about 1.0" cell diameter.

Second intermediate section 412c may comprise a number of cartridges generally as described above, and may have a thickness of about 12 to about 18 inches, although a greater or lesser thickness is possible. The number of cartridges is selected based on the thickness of cartridges and the length of second intermediate section 412c. The cells in second intermediate section 412c preferably have cell diameter greater than the cell diameter of the cells in cartridges in section 412b, and preferably about 1.25" cell diameter.

Distal section 412d may comprise a number of cartridges as described above, and may have a thickness of about 15 inches to about 24 inches, although a greater or lesser thickness is possible. The number of cartridges is selected based on the thickness of cartridges and the length of distal section 412d. The cells in distal section 412d preferably have a cell diameter greater than the cell diameter of the cells of second intermediate section 412c, and may preferably have about 1.5" cell diameter.

Energy absorbing body 406 is preferably encased in a lightweight, rigid, water-impermeable skin. The skin may be as described above with reference to the skin of body 106.

Body 406 may be rectangular in shape, with a planar upper surface. Alternatively, as may be seen generally at 420, the upper surface of body 406 may be tapered near the distal end thereof. The optional tapered surface provided permits mounting of accessories, such as brake and turn indicator lights, with a plurality of bodies 406 stacked on one another.

In one embodiment, body 406 has an overall length of about 78 inches, and an overall width of about 90 inches, and an overall height of about 28 inches. The optional tapered portion extends about 15 inches from the distal end, and the height at the distal end is about 22 inches. Panel 422 may be about 33 inches from the proximal end of body 406. Such a body 406 fully absorbs the kinetic energy of a passenger car or truck having a mass of 2000 kilograms moving at a speed of up to about 70 kilometers per hour.

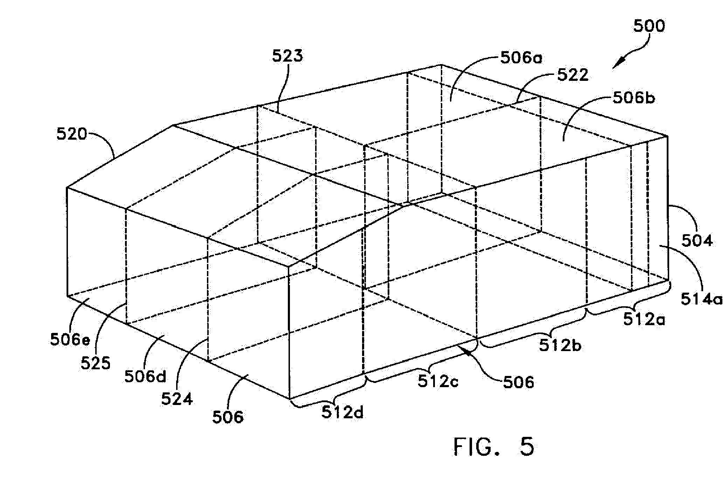

Referring now to Fig. 5, a crash cushion 500 according to another embodiment of the invention is shown somewhat schematically. The crash cushion 500 has a back plate 504 and an energy absorbing body 506. The back plate 504 may be identical to back plate 104 of the embodiment of Fig. 1, and is generally indicated by dashed lines. The energy absorbing body 506 comprises a plurality of individual cartridges as described above. The cartridges are arranged to provide at least five sections 512a, 512b, 512c, 512d and 512e of different impact absorption. The proximal section 512a has a relatively greater impact resistance, and the cartridges forming this section become deformed only with the application of relatively high forces resulting from relatively high speed impacts, i.e., impacts from vehicles traveling at or near the highest speed for which cushion 506 is approved, with little crushing or other damage at lower speed impacts. The first intermediate section 512b has lesser impact resistance, and the cartridges forming this section are more easily damaged than those of proximal section 512a, becoming deformed at impacts of relatively lower speeds than those impacts that cause deformation of the cartridges of proximal section 512a, while the second intermediate section 512c has still lesser impact resistance, and the cartridges forming this section are more easily damaged than the cartridges of sections 512a or 512b. Third intermediate section 512d has still lesser impact resistance than second intermediate section 512c. Distal section 512e has cartridges that have still less impact resistance than those of third intermediate section 512d, and bear the brunt of low and moderate speed impacts.

Impact absorbing body 506 may be divided into five chambers. Sections 512a, 512b may be divided into two chambers 506a, 506b by vertical, longitudinal, generally planar panel 522, indicated in dashed lines in Fig. 5. Panel 522 extends to vertical, transverse, generally planar panel 523, indicated in dashed lines in Fig. 5. Sections 512c, 512d, and 512e are divided into three chambers 506c, 506d, 506e, of equal dimensions by vertical, longitudinal, generally planar panels 524, 525, indicated in dashed lines in Fig. 5. Panels 522, 523, 524, 525 may be made of a rigid material, such as a metal, and may be of aluminum. Transverse panel 523 provides a structural reinforcement for body 506, tending to prevent or reduce torquing of body 506.

The proximal section 512a in chamber 506a may comprise a number of cartridges generally as described above, and may have a thickness of about 30 to about 36 inches, although a greater or lesser thickness is possible. The number of cartridges is selected based on the thickness of cartridges and the length of proximal section 512a. The cells in proximal section 512a preferably have a 0.75" cell diameter.

First intermediate section 512b may comprise a number of cartridges and may have a thickness of about 30 to about 36 inches, although a greater or lesser thickness is possible. The number of cartridges is selected based on the thickness of cartridges and the length of section 512b. The cells in first intermediate section 512b preferably have cell diameter greater than the cell diameter of the cells in section 512a, and preferably about 1.0" cell diameter.

Second intermediate section 512c may comprise a number of cartridges and may have a thickness of about 12 to about 18 inches, although a greater or lesser thickness is possible. The number of cartridges is selected based on the thickness of cartridges and the length of second intermediate section 512c. The cells in second intermediate section 512c preferably have cell diameter greater than the cell diameter of the cells in section 512a, and preferably about 1.25" cell diameter.

Distal section 512d may comprise a number of cartridges and may have a thickness of about 15 inches to about 24 inches, although a greater or lesser thickness is possible. The number of cartridges is selected based on the thickness of cartridges and the length of distal section 512d. The cells in distal section 512d preferably have a cell diameter greater than the cell diameter of the cells of second intermediate section 512c, and may preferably have about 1.5" cell diameter.

Energy absorbing body 506 is preferably encased in a lightweight, rigid, water-impermeable skin. The skin may be as described above with reference to the skin of body 106.

Body 506 may be rectangular in shape, with a planar upper surface. Alternatively, as may be seen generally at 520, the upper surface of body 506 may be tapered near the distal end thereof. The optional tapered surface provided permits mounting of accessories, such as brake and turn indicator lights, with a plurality of bodies 506 stacked on one another.

In one embodiment, body 506 has an overall length of about 90 inches, and an overall width of about 90 inches, and an overall height of about 28 inches. The optional tapered portion extends about 15 inches from the distal end, and the height at the distal end is about 22 inches. Panel 422 may be about 45 inches from the proximal end of body 506. Such a body 506 fully absorbs the kinetic energy of a passenger car or truck having a mass of 2000 kilograms moving at a speed of up to about 80 kilometers per hour.

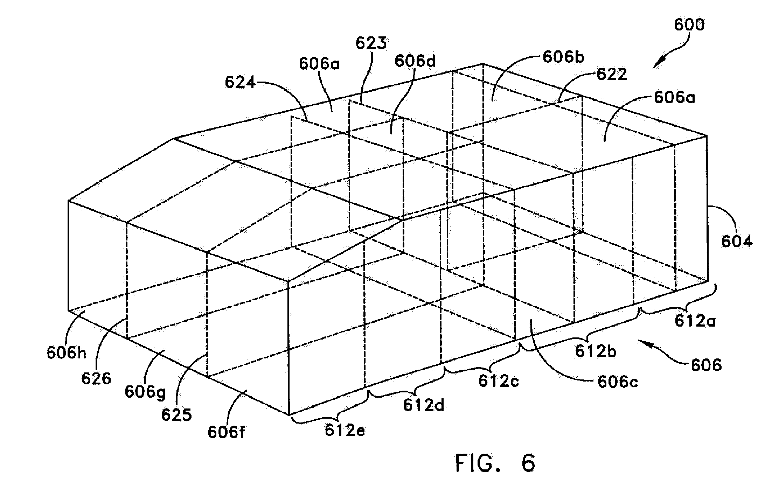

Referring now to Fig. 6, a crash cushion 600 according to another embodiment of the invention is shown somewhat schematically. The crash cushion 600 has a back plate 604 and an energy absorbing body 606. The back plate 604 may be identical to back plate 604 of the embodiment of Fig. 1, and is generally indicated by dashed lines. The energy absorbing body 606 comprises a plurality of individual cartridges. The cartridges are arranged to provide at least five sections 612a, 612b, 612c, 612d and 612e of different impact absorption. The proximal section 612a has a relatively greater impact resistance, and the cartridges forming this section become deformed only with the application of relatively high forces resulting from relatively high speed impacts, i.e., impacts from vehicles traveling at or near the highest speed for which cushion 606 is approved, with little crushing or other damage at lower speed impacts. The first intermediate section 612b has lesser impact resistance, and the cartridges forming this section are more easily damaged than those of proximal section 612a, becoming deformed at impacts of relatively lower speeds than those impacts that cause deformation of the cartridges of proximal section 612a, while the second intermediate section 612c has still lesser impact resistance, and the cartridges forming this section are more easily damaged than the cartridges of sections 612a or 612b. Third intermediate section 612d has still lesser impact resistance than second intermediate section 612c. Distal section 612e has cartridges that have still less impact resistance than those of third intermediate section 612d, and bear the brunt of low and moderate speed impacts. The cartridges of the respective sections may be as described with respect to body 506 of Fig. 5, except for the division into chambers, as described below. Sections 612a, 612b, 612c, 612d and 612e may have equal or approximately lengths. By way of example, the cartridges of section 612a may have a cell diameter of 0.5"; the cartridges of section 612b may have a cell diameter of 0.75"; the cartridges of section 612c may have a cell diameter of 1.00"; the cartridges of section 612d may have a cell diameter of 1.25"; and the cartridges of section 612e may have a cell diameter of about 1.50".

Impact absorbing body 606 may be divided into eight chambers. Section 612a and at least a proximal portion of section 612b may be divided into two chambers 606a, 606b by vertical, longitudinal, generally planar panel 622, indicated in dashed lines in Fig. 6. Panel 622 extends to vertical, transverse, generally planar panel 623, indicated in dashed lines in Fig. 5. A distal portion of section 612b is divided into chambers 606c, 606d, 606e, of generally equal dimensions, defined by panel 623, a second vertical, transverse, generally planar panel 624, and vertical, planar, longitudinal panels 625, 626. It will be appreciated that panel 624, or panels 625, 626, may be made of multiple parts or suitably cut to engage at their respective intersections. Sections 612c, 612d, and 612e are divided into three chambers 606f, 606g, 606h, of equal dimensions by longitudinal panels 625, 626. Panels 622, 623, 624, 625, 626 may be made of a rigid material, such as a metal, and may be of aluminum. Transverse panels 623, 624 provide a structural reinforcement for body 606, tending to prevent or reduce torquing of body 606.

Energy absorbing body 606 is preferably encased in a lightweight, rigid, water-impermeable skin. The skin may be as described above with reference to the skin of body 106.

Body 606 may be rectangular in shape, with a planar upper surface. Alternatively, as may be seen generally at 620, the upper surface of body 606 may be tapered near the distal end thereof. The optional tapered surface provided permits mounting of accessories, such as brake and turn indicator lights, with a plurality of bodies 606 stacked on one another.

In one embodiment, body 606 has an overall length of about 109 inches, and an overall width of about 90 inches, and an overall height of about 28 inches. The optional tapered portion extends about 15 inches from the distal end, and the height at the distal end is about 22 inches. Panel 623 may be about 64 inches from the proximal end of body 606. Panel 624 may be about 25 inches from panel 623. Such a body 606 fully absorbs the kinetic energy of a passenger car or truck having a mass of 2000 kilograms moving at a speed of up to about 90 kilometers per hour.

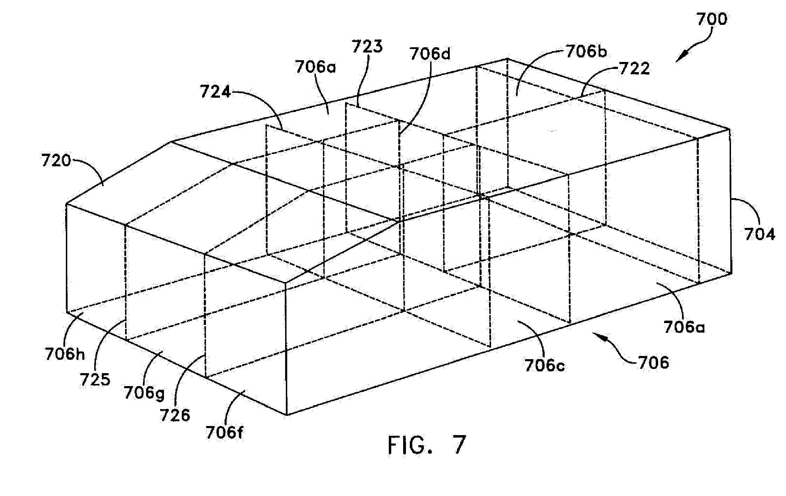

Referring now to Fig. 7, an embodiment 700 of the cushion of the invention is shown which differs from the embodiment of Fig. 6 only in the overall dimensions and the locations of the interior panels. The internal sections may have different dimensions, but otherwise are identical to those of Fig. 6, and thus are not illustrated. Body 706 has proximal chambers 706a, 706b defined by vertical, longitudinal, generally planar panel 722, indicated in dashed lines in Fig. 7. Panel 722 extends to vertical, transverse, generally planar panel 723, indicated in dashed lines in Fig. 7. Chambers 706c, 706d, 706e, of generally equal dimensions, are defined by panel 723, a second vertical, transverse, generally planar panel 724, and vertical, planar, longitudinal panels 725, 726. It will be appreciated that panel 724, or panels 725, 726, may be made of multiple parts or suitably cut to engage at their respective intersections. Chambers 706f, 706g, 706h, of equal dimensions, are defined by longitudinal panels 725, 726. Panels 722, 723, 724, 725, 726 may be made of a rigid material, such as a metal, and may be of aluminum. Transverse panels 723, 724 provide a structural reinforcement for body 706, tending to prevent or reduce torquing of body 706.

Energy absorbing body 706 is preferably encased in a lightweight, rigid, water-impermeable skin. The skin may be as described above with reference to the skin of body 106.

Body 706 may be rectangular in shape, with a planar upper surface. Alternatively, as may be seen generally at 720, the upper surface of body 706 may be tapered near the distal end thereof. The optional tapered surface provided permits mounting of accessories, such as brake and turn indicator lights, with a plurality of bodies 706 stacked on one another.

In one embodiment, body 706 has an overall length of about 129 inches, and an overall width of about 90 inches, and an overall height of about 28 inches. The optional tapered portion extends about 15 inches from the distal end, and the height at the distal end is about 22 inches. Panel 723 may be about 51 inches from the proximal end of body 706. Panel 724 may be about 33 inches from panel 723. Such a body 706 fully absorbs the kinetic energy of a passenger car or truck having a mass of 2000 kilograms moving at a speed of up to about 100 kilometers per hour.

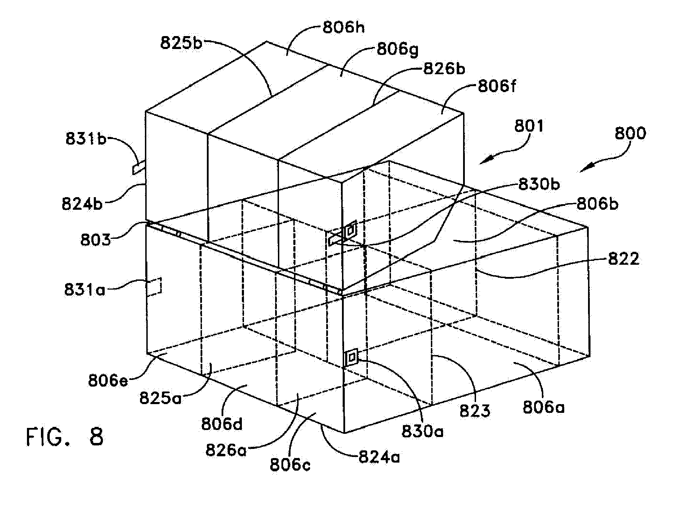

Referring now to Fig. 8, a crash cushion 800 of the invention will be described. Crash cushion 800 is substantially identical to crash cushion 700 described above, except that crash cushion 800 has a proximal body 801 and a distal body 802. Each of proximal body 801 and distal body 802 has an enveloping skin, which preferably is made up of aluminum panels, riveted together, and provided with tape, caulk and paint as described above. Proximal body 801 includes two proximal chambers 806a, 806b, separated by vertical longitudinal panel 822, similar to chambers 706a and 706b, and three intermediate chambers 806c, 806d and 806e, similar to chambers 706c, 706d and 706e, as described with respect to cushion 700, and distal body 802 includes three chambers 806f, 806g, 806h similar to chambers 706f, 706g, 706h of cushion 700. Vertical longitudinal panels 825a, 826a separate chambers 806c, 806d and 806e in proximal body 801. Vertical transverse panel 823 separates chambers 806a, 806b, from chambers 806c, 806d, 806e in distal body 801. Vertical longitudinal panels 825b, 826b separate chambers 806f, 806g, 806h in distal body 802. Proximal body 801 and distal body 802 are hingedly joined by exemplary hinges 803. A piano hinge may be provided along the entire abutting edges. Latches of any suitable design may be provided, as shown at 830a, 830b, 831a, 831b. Additional latches may be provided, and at various locations along the edges. Latches or any other suitable arrangement cause proximal body 801 and distal body 802 not to move relative to one another when in an operating orientation. A separation of about 3 inches may be provided between rear wall 824a of proximal body 801 and forward wall 824 b of distal body 802.

In an exemplary embodiment, distal body 802 may have a length of about 45 inches, and proximal body 801 may have a length of about 83 inches. Interior transverse panel 823 of proximal body 801 may be at about 48 inches from the proximal end of proximal body 801. Distal body 802 may be rotated up to rest on the top surface of proximal body 801 during storage and transport, and then rotated down and latched into its operating position.

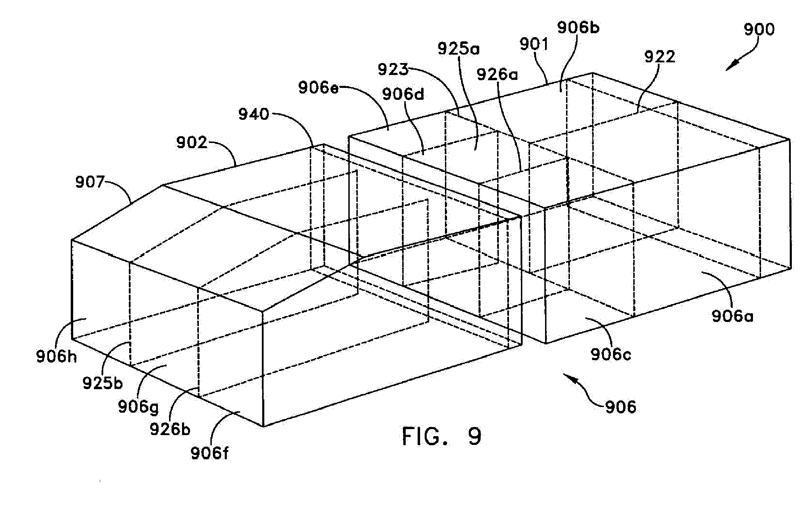

Referring now to Fig. 9, a crash cushion 900 of the invention will be described. Crash cushion 900 is substantially identical to crash cushion 700 described above, except that crash cushion 900 has a proximal body 901 and a distal body 902. Each of proximal body 901 and distal body 902 has an enveloping skin, which preferably is made up of aluminum panels, riveted together, and provided with tape, caulk and paint as described above. Proximal body 901 includes two proximal chambers 906a, 906b, separated by vertical, longitudinal panel 922, similar to chambers 706a and 706b, and three intermediate chambers, 906c, 906d, 906e, separated by vertical longitudinal panels 925a, 926a, similar to chambers 706c, 706d and 706e, as described with respect to cushion 700, and distal body 902 includes three distal chambers 906f, 906g, 906h, separated by vertical, longitudinal panels 925b, 926b, similar to chambers 706f, 706g, 706h. Vertical transverse panel 923 separates proximal chambers 906a, 906b from intermediate chambers 906c, 906d, 906e. Distal body 902 has at its proximal end sleeve 940. Sleeve 940 is dimensioned to receive the distal end of proximal body 901. Sleeve 940 may be continuous, as shown, or may be discontinuous. Sleeve 940 may be an extension of the skin of distal body 902, or may be made up of such materials as panels or bent sheet metal and affixed to the skin of distal body 902. Sleeve 940 may be riveted or otherwise securely and rigidly connected to proximal body 901. In an alternative embodiment, sleeve 940 may be attached to the distal end of proximal body 901, to receive a proximal end of distal body 902.

In an exemplary embodiment, distal body 902 may have a length of about 48 inches, with about 3 inches of that length provided by sleeve 940. Proximal body 901 may have a length of about 86 inches. When assembled, body 906 may have a length of about 129 inches. Interior transverse panel 923 of proximal body 901 may be at about 51 inches from the proximal end of proximal body 901.

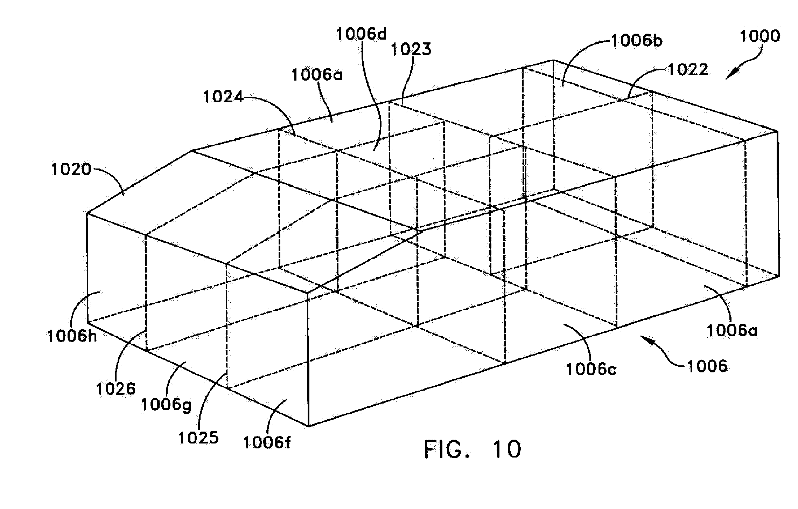

Referring to Fig. 10, an embodiment 1000 of the cushion of the invention is shown which differs from the embodiment of Fig. 6 only in the overall dimensions, and the locations of the interior panels. The internal sections may have different dimensions, but otherwise are identical to those of Fig. 6, and thus are not illustrated.

Body 1006 has proximal chambers 1006a, 1006b defined by vertical, longitudinal, generally planar panel 1022, indicated in dashed lines in Fig. 10. Panel 1022 extends to vertical, transverse, generally planar panel 1023, indicated in dashed lines in Fig. 10. Chambers 1006c, 1006d, 1006e, of generally equal dimensions, are defined by panel 1023, a second vertical, transverse, generally planar panel 1024, and vertical, planar, longitudinal panels 1025, 1026. It will be appreciated that panel 1024, or panels 1025, 1026, may be made of multiple parts or suitably cut to engage at their respective intersections. Chambers 1006f, 1006g, 1006h, of equal dimensions, are defined by longitudinal panels 1025, 1026. Panels 1022, 1023, 1024, 1025, 1026 may be made of a rigid material, such as a metal, and may be of aluminum. Transverse panels 1023, 1024 provide a structural reinforcement for body 1006, tending to prevent or reduce torquing of body 1006.

Energy absorbing body 1006 is preferably encased in a lightweight, rigid, water-impermeable skin. The skin may be as described above with reference to the skin of body 106.

Body 1006 may be rectangular in shape, with a planar upper surface. Alternatively, as may be seen generally at 1020, the upper surface of body 1006 may be tapered near the distal end thereof. The optional tapered surface provided permits mounting of accessories, such as brake and turn indicator lights, with a plurality of bodies 1006 stacked on one another.

In one embodiment, body 1006 has an overall length of about 149 inches, and an overall width of about 90 inches, and an overall height of about 28 inches. The optional tapered portion extends about 15 inches from the distal end, and the height at the distal end is about 22 inches. Panel 1023 may be about 61 inches from the proximal end of body 1006. Panel 1024 may be about 33 inches from panel 1023. Such a body 1006 fully absorbs the kinetic energy of a passenger car or truck having a mass of 2000 kilograms moving at a speed of up to about 110 kilometers per hour.

The foregoing description of the embodiments of this invention has been presented for purposes of illustration and description. It is not intended to be exhaustive or to limit the invention to the forms explicitly disclosed, as many modifications and variations are possible without departing from the scope and spirit of the present invention.

Modifications and variations that may be apparent to a person skilled in the art are intended to be included within the scope of this invention.

## Claims

1. A cushion (100) for a crash attenuation system, comprising:
an energy absorbing body (106) having a proximal end and a distal end, said body comprising:
at least one vertical, longitudinal panel (122) dividing said body into at least two chambers (106a, 106b);
a plurality of cartridges (114a, 114b, 114c) contained in each said chamber (106a, 106b), each said cartridge having a first and a second transverse face, said cartridges abutting each other along their transverse faces and dividing said body into a plurality of sections (112a, 112b, 112c) of differing impact resistance capacities, and each said cartridge made of layers of hexagonal remanufactured fibrous material cells (115), said cells (115) oriented with their long axes in the longitudinal direction;
and a water-impermeable skin (107), said skin encompassing said body (106); and
a back plate (104) rigidly attached to said body (106).

2. The cushion for crash attenuation system as set forth in claim 1 wherein said sections comprise a first section (112a) having a highest impact resistance capacity, at said distal end of said body (106), a second section (112b) having an intermediate impact resistance capacity, between the said distal and said proximal end of said body (106) and a third section (112c) having a lowest impact resistance capacity, at said proximal end of said body (106).

3. The cushion for crash attenuation system as set forth in claim 1, said water-impermeable skin (107) further comprising:
a plurality of panels; and
means for joining said panels.

4. The cushion for crash attenuation system as set forth in claim 3 wherein said skin has a coating of water-soluble, rust-inhibitive paint.

5. The cushion for crash attenuation system as set forth in claim 1 wherein all said cartridges (114a) in each said chamber are wrapped in a water-impermeable bag (117).

6. The cushion for crash attenuation system as set forth in claim 1 wherein said body further comprises at least one transverse, vertical panel (422).

7. The cushion for crash attenuation system as set forth in claim 1, further comprising:
a secondary energy absorbing body (802), said secondary energy absorbing body (802) movably connected to said body (801) and adapted to be removably latched to said body (801), when said system is in an operational mode, said secondary body (802) comprising:
at least one vertical, longitudinal panel (825b) dividing said secondary body (802) into at least two chambers;
a plurality of said cartridges contained in each said chamber, said cartridges dividing said secondary body into a plurality of sections of differing impact resistance capacities; and
a water-impermeable skin, said skin encompassing said secondary body.

8. The cushion for crash attenuation system as set forth in claim 7 wherein said body (801) and said secondary body (802) are hingedly connected.

9. The cushion for crash attenuation system as set forth in claim 1, further comprising:
a secondary energy absorbing body (902), said secondary body (902) removably, rigidly connected to said body (901) at said distal end thereof, said secondary body comprising:
at least one vertical, longitudinal panel (925b) dividing said secondary body (902) into at least two chambers (906f, 906g);
a plurality of said cartridges contained in each said chamber, said cartridges dividing said secondary body into a plurality of sections of differing impact resistance capacities; and
a water-impermeable skin (907), said skin (907) encompassing said secondary body (902).

10. The cushion for crash attenuation system as set forth in claim 9, wherein one of said body (901) and said secondary body (902) has a sleeve (904) mounted thereon, said sleeve adapted to receive the other one of said body and said secondary body.
